## Europäisches Patentamt
## European Patent Office
## Office européen des brevets

(11) Publication number: **0 126 597**
**B1**

(12) **EUROPEAN PATENT SPECIFICATION**

(45) Date of publication of patent specification: **04.05.88**

(21) Application number: **84303196.4**

(22) Date of filing: **11.05.84**

(51) Int. Cl.⁴: **H 04 N 7/18**

(54) **Video static display.**

(30) Priority: **19.05.83 GB 8313881**
**24.06.83 GB 8317301**
**08.03.84 GB 8406111**

(43) Date of publication of application:
**28.11.84 Bulletin 84/48**

(45) Publication of the grant of the patent:
**04.05.88 Bulletin 88/18**

(84) Designated Contracting States:
**BE DE FR GB IT NL**

(56) References cited:
**DE-A-2 011 674**
**US-A-2 866 847**
**US-A-4 057 830**

(73) Proprietor: **EMI Limited**
**Blyth Road**
**Hayes Middlesex, UB3 1BP (GB)**

(72) Inventor: **Humphries, Bryan Jason**
**5, Convent Road**
**Windsor Berkshire (GB)**

(74) Representative: **Marsh, Robin Geoffrey**
**Thorn EMI Patents Limited The Quadrangle**
**Westmount Centre Uxbridge Road**
**Hayes Middlesex, UB4 0HB (GB)**

Courier Press, Leamington Spa, England.

# Description

The present invention relates to equipment for displaying a still image on a video display unit, particularly but not exclusively for displaying a photograph on a television receiver.

At present a photograph can be displayed on a television by mounting the negative or transparency (as appropriate) in an adaptor and then filming it with a conventional video camera connected to a television receiver or a video cassette recorder.

U.S. Patent Specification 4057830 describes an electronic system which generates electronic signals from an optical image and stores all these signals on recording media for subsequent input to a display unit as a still-life photograph.

The present invention provides eqipment for displaying a still image on a video display unit, said equipment comprising:

means to produce electrical signals which represent an optical image;

A single opto-electric converter device, in said electrical signal production means, with a single pick-up tube to pick up a light beams and convert it to an electrical signal;

a light source, in said electrical signal production means, positioned to direct a beam of light through a region for containing an optical representation and towards the single opto-electric converter device;

a filter having a number of sections of different pass-band characteristics, individually selectable for use in association with the electrical-signal production means, at least some of the pass-band characteristics constituting colour-component characteristics;

means to switch operation of the filter, in relation to the electrical-signal production means, between at least two pass-band characteristics;

means to store the output of the electrical-signal production means for each of at least two of the pass-band characteristics of the filter, the outputs constituting colour-component signals;

means for providing a repeated output of colour-component signals held in the storage means;

means for mixing signals from the repeated-output means with signals directly output, without storage, from the electrical-signal production means, thereby to provide a composite video signal for display.

Preferably, the equipment comprises means to store, separately, the output of the electrical-signal production means for each of three pass-band characteristics of the filter, whereby each of the three characteristics relates to a different one of the three appropriate fundamental colour-components.

Also, preferably the equipment comprises means to store, separately the output of the electrical-signal production means for each of two pass-band characteristics of the filter, whereby these two characteristics relate to two of the three appropriate fundamental colour-components, and means to derive a signal relating to the third of the appropriate fundamental colour-components, the derivation means making use of signals related to the other two of the fundamental colour-components and/or of signals not incorporating individual colour-components.

The opto-electric converter device may be any suitable image pick-up device to derive electrical signals from an optical image, for example it may be a photo conductive camera tube, a solid-state device or a photomultiplier of a flying spot scanner.

Preferably, the storage means holds the low band chrominance and luminance components derived via a RED optical filter in one store and via a BLUE optical filter in another store, while the remaining component derived from the input light (namely the wide band luminance component) is received continuously from the opto-electric converter device.

Thus, a minimum of storage capacity is used to provide a video signal suitable for display.

Moreover, when the opto-electric converter device is a camera, only one camera tube is required; when it is a photomultiplier of flying spot scanner, then only one photomultiplier and no dichroic mirror for beam splitting is required.

The filter may be of any suitable form. In one example, the filter is a disc having a number of separate sections, each permitting transmission of a different part of the light spectrum, the disc being movable within the equipment such as to selectively position the sections in the light path. The filter may be suited for use with negative film or with transparency film or with a combination of both.

In one form of the invention, the equipment is used with a conventional television receiver in which case at least some of the functions of the mixing means may be achieved by the conventional circuits of the reciever. Also the equipment may utilize the sync signals from a broadcast signal received by the receiver, and the cathode ray tube drive signals may be used in scanning operation. The video drives for the cathode ray tube of the receiver may also be used with the equipment so that its values of R, G, B outputs need only be nominal. The equipment may be incorporated within the conventional television receiver or it may be a separate assembly electrically connected to the receiver.

In another form of the invention, the equipment is a complete, stand-alone assembly which incorporates a video display unit. In this case, it requires a generator of synchronising pulses and also a generator of scanning signals.

Equipment embodying the present invention may have the facility of displaying automatically a succession of still images each for a predetermined time interval, e.g two to five seconds. There may also be a synchronised sound track.

In another form, the equipment may comprise first storage means to store the output of the electrical-signal production means for each of at least three of the pass-band characteristics of the filter, at least two of the outputs constituting colour-component signals;

second storage means to store some, but not all, the signals held in the first storage means;

means for providing a repeated output of colour-component signals held in the second storage means;

means for mixing signals from the repeated-output means with signals directly output from the first storage means, thereby to provide a composite video signal for display.

Preferabbly the first storage means has a high storage capacity sufficient to hold, at any one time, the information representing a number of still images for display; also advantageously it is non-volatile. Examples of suitable forms of first storage means are an audio tape recorder and a video tape recorder.

The signal components may be stored in analogue form on the first storage means; alternatively, one or more of the signals may be stored in digital form on the first storage means.

Preferably the second storage means has a low storage capacity, sufficient to hold, at any one time, information from a single still image for display; also the second storage means may be volatile. Thus the second storage means may be formed of one or more electronic solid-state devices.

Equipment embodying this aspect of the present invention enables sequential output of the separate electrical signal components from the first storage means, and thereby minimises the number of devices (i.e. tape heads where the first storage means is a tape recorder) needed to do this function; moreover a minimum of storage capacity is used to achieve these results.

This aspect of the present invention may also provide equipment for displaying a still image on a video display unit, said equipment comprising first storage means for storing a plurality of colour-component electrical signals each derived from a still image for display, second storage means for storing some of the colour-component electrical signals from all those in the first storage means, means for providing a repeated output of colour-component signals from said second storage means, and means to mix the repeated outputs from said second storage means with another colour-component signal, which is derived directly from the first storage means, to provide a composite video signal for display.

This aspect of the present invention may furthermore provide a playback module for use in the equipment for displaying a still image on a video display unit, the module comprising solid-state storage means for storing some of the colour-component electrical signals which represent an optical image, means for providing a repeated output of colour-component signals from the solid-state means, and means to mix the repeated outputs of the solid-state storage means with the remainder of the colour-component signals representing the optical image and being input directly to the mixing means to provide a composite video signal for display.

In order that the invention may more readily be understood, a description is now given, by way of example only, reference being made to the accompanying drawings, in which:—

Figure 1 is a schematic diagram of an "add-on" unit embodying the present invention for use with conventional domestic television receiver;

Figure 2 illustrates the filter in the unit of Figure 1.

Figure 3 illustrates a modification to part of the unit of Figure 1;

Figures 4 to 6 are schematic diagrams, each illustrating a different embodiment of a unit according to the present invention; and

Figure 7 is a schematic diagram of a unit embodying another aspect of the present invention.

The illustrated equipment is an "add-on" unit for electrical connection to a conventional domestic television receiver to enable the receiver to display on its screen a static image derived from a photographic negative in the disc format developed by the Eastman Kodak Corporation. The unit can be used to display successively a number of negatives either under manual or automatic control, and the sequence of display may be related to the order of negatives in the disc or to a different, predetermined arrangement. The length of time for displaying each negative may be suitably chosen, and may be constant for the sequence of negatives or may vary according to the particular negative on display. The unit may also provide some audio accompaniment synchronised with the display of negatives. The unit can be suitably modified to display negatives of formats other than the disc format, and also modified to display transparencies of any format.

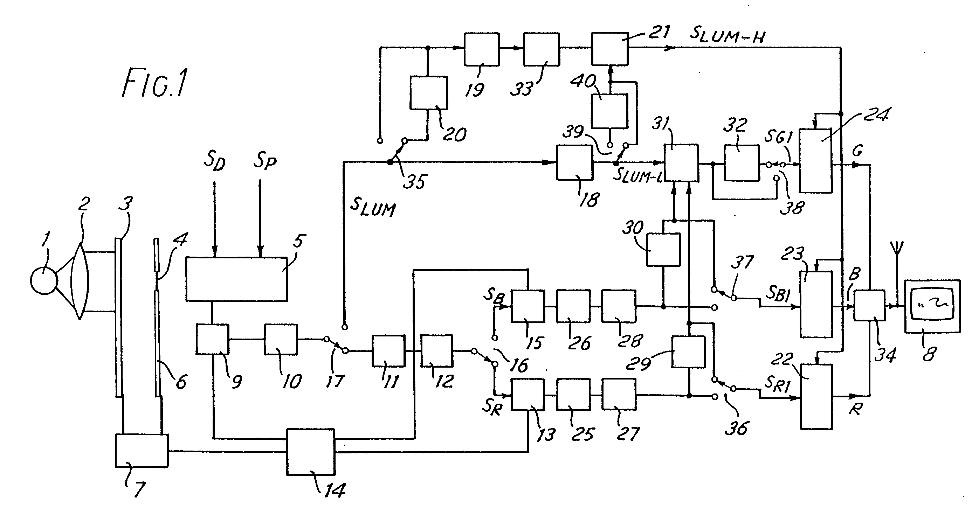

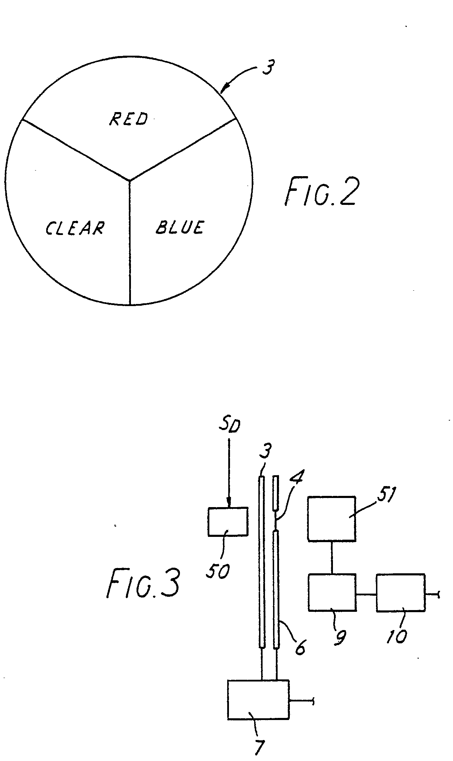

More specifically, in the unit shown in Figure 1, light from an appropriate source 1 is directed by a lens system 2 through a filter 3 and onto a negative 4 so as to project an image onto the light sensitive target area of a 2 cm vidicon pick-up tube 5. Negative 4 is held in a plastics mount 6 of the kodak disc format. The filter 3 is a wheel having three sectors, each of which transmits a different colour portion of an incident light beam (see Figure 2); the wheel is mounted for rotation by a drive motor 7 such that each sector of the filter can be positioned in the path of the light beam in turn. Signals received at the pick-up tube 5 are suitably processed (as described in further detail below) and then passed to a conventional television receiver 8 for display on its screen. When the negative 4 has been displayed on the screen of receiver 8 for a sufficient time, motor 7 rotates mount 6 until another negative is suitably positioned in the light beam for display.

At the start of operation of the unit, the filter 3 is in an orientation whereby a sector which transmits only red light is in the light beam; as the signals for forming the red image on the television screen are derived by this sector of the filter 3, it will subsequently be referred to as the RED sector. Using the CRT drives ($S_D$) of receiver 8 as the scanning signals for pick-up tube 5, the latter scans the complete frame of the red component image to form an appropriate electric signal which is amplified at the pick-up head amplifier 9. This signal is then fed to a video processor 10, at which suitable blanking and clamping are added, and then passed through a low-pass filter 11 with a cut-off level of 1 Megaherz so that the resultant signal ($S_R$) relates to the red low band chrominance and luminance component of the negative 4. After processing at an analogue-to-digital converter 12, the signal $S_R$ is stored in a memory store 13. A controller 14 monitors the store 13 so that once it has received the complete frame signal $S_R$ the controller 14 instructs motor 7 to turn filter 3 until a sector which transmits only blue light is in the light beam; this sector will subsequently be referred to as the BLUE sector. After processing in the same way as for the red image, the resultant signal ($S_B$) is stored in a separate memory store 15 by suitable operation of switch 16.

Controller 14 also monitors the store 15 so that, as soon as the latter has received the complete frame signal of $S_B$, motor 7 is instructed to turn filter 3 until the transparent sector is in the light beam, so that a wide band luminance image of negative 4 is produced for tube 5. The transparent sector of filter 3 has a pass-band characteristic similar to the response of a human eye as published by C.I.E., with due allowance for the film base material used, additional to or augmenting any colour balancing (known as "Auto White") provision. Thus with suitable operation of switch 17, the frame signal representing the wide band luminance image ($S_{LUM}$) passes to low-pass filter 18. As this filter 18 has a cut-off level of 1 Megaherz, the emergent signal ($S_{LUM-L}$) only has the low band luminance component remaining. Signal $S_{LUM}$ representing the complete luminance image is also passed to another low-pass filter 19, after inversion by inverter 20. As filter 19 has a higher cut-off level, namely 5 Megaherz, the emergent signal retains the full luminance component; this signal is then passed to summing amplifier 21 for combination with the signal $S_{LUM-L}$ thereby resulting in a signal ($S_{LUM-H}$) formed only of the inversion of the high band luminance component which can then be passed on to summing amplifiers 22, 23 and 24.

Meanwhile, the stores 13 and 15 have read out duplicates of the signals $S_R$ and $S_B$ held in their memories, these duplicate signals being converted to analogue form in converters 25 and 26 and then being passed through low-pass filters 27 and 28 (with a 1 Megaherz cut-off level) to remove any residual sampling components. Each of these signals is then inverted by an inverter 29 or 30 to form signals $S_{R1}$ and $S_{B1}$ which are processed in matrixing unit 31 together with $S_{LUM-L}$ to generate a signal representing the low band green chrominance and luminance signal $S_G$. After passing through inverter 32, the resultant signal ($S_{G1}$) is summed with $S_{LUM-H}$ in summing amplifier 24 to produce a G signal suitable for use in the receiver 8; similar summing for $S_{R1}$ and $S_{B1}$ in summing amplifiers 22 and 23 respectively result in appropriate R and B signals.

By suitable timing of the read-out from stores 13 and 15 and by inclusion of an analogue delay 33 the signal $S_{LUM-H}$ arrives at each of the summing amplifiers simultaneously with the corresponding low band chrominance and luminance component signal. The output signals from these summing amplifiers 22, 23 and 24 form G, R and B component signals which when passed to television reciever 8 via encoder 34 are sufficient to display a full frame picture of negative 4 on the screen.

Throughout the remaining time for displaying negative 4 on the screen of television receiver 8, the filter 3 and switch 17 are maintained in the same position. Thus, each scan by the pick-up tube across negative 4 produces another signal $S_{LUM}$ which is processed and summed with readouts from stores 13 and 15 (as described before) to produce a full frame signal for display on the screen.

When it is desired to display another negative, controller 14 instructs motor 7 to rotate mount 6 so as to position the required negative in the light beam and to return the filter 3 to its first operative position; then controller 14 clears the stores 13 and 15. Controller 14 may rotate mount 6 such that the negatives are displayed in their sequence of occurrence on the mount; alternatively controller 14 may proudce a different, predetermined sequence. Controller 14 may also vary the length of time for which the negatives are displayed; it may also synchronise the display of negatives with a sound track.

Synchronisation pulses ($S_p$) derived from broadcast signals received at the television receiver 8 are used to synchronise the pick-up tube 5 and other elements of the unit.

If it is desired to display a picture of a photographic transparency rather than a negative, the switches 35, 36, 37 and 38 are operated so as to by-pass inverters 20, 29, 30 and 32 respectively, while switch 39 is operated to connect in inverter 40. Alternatively, colour inversion can be achieved by an appropriate choice of colour filter.

In a modification, summing amplifier 24 is omitted and the signal $S_{LUM}$ is used directly as the G component signal for receiver 8; in this case, signal $S_{LUM-H}$ still needs to be produced in order to be summed with the duplicate signals of $S_{R1}$ and $S_{B1}$.

The unit may be modified such that, in use, the stores 13 and 15 hold the red low band component and the blue low band components respectively, and the green wide-band luminance signal is passed to filters 18 and 19 without storage. Thus the green wide-band luminance signal is used as an approximation to the total luminance component and the green high-band component can be added to the red and blue low band components (from the stores) to produce the R and B output signals.

When the unit is switched on or at any time during operation of the unit, an "Auto White" routine can be performed by rapidly cycling the filter wheel through one sequence and adjusting the signal levels in the separate paths respectively.

The output signals from the summing amplifiers 22, 23 and 24 may also be used to produce a print from the negative or transparency for example by using the signals to modulate light beams scanned across light-sensitive paper.

The unit may be modified by replacing the arrangement of light source 1, lens system 2 and vidicon pick-up tube 5 with a flying spot scanner. Figure 3 shows only that section of the unit which is changed by this modification, the remainder of the unit being identical to that shown in Figure 1.

A high intensity cathode ray tube 50 utilizes the CRT drives $(S_D)$ of receiver 8 to generate a bright spot which scans the entire screen of tube 50. Light from this scanning spot is directed through filter 3, positioned close to cathode ray tube 50, and onto negative 4 so as to project a scanning representation of the filtered image onto a photomultiplier 51. Thus the output of this photomultiplier 51 is an electrical signal in a format suitable for processing in video processor 10 (after amplification, if necessary, at amplifier 9). All operations of filter 3 and mount 6, and all processing of the electrical signals derived from photomultiplier 51, are identical to those as described with reference to the unit of Figure 1.

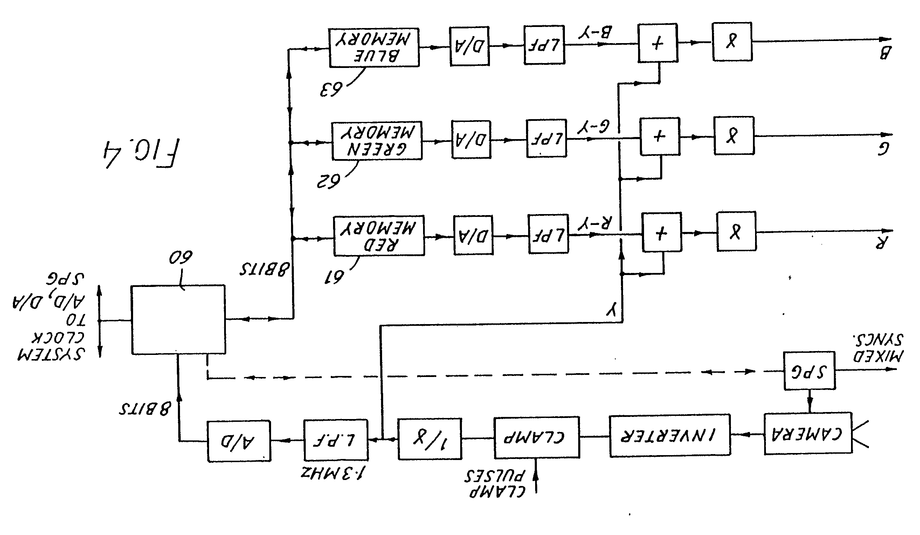

Figure 4 shows, in block diagram format, another unit embodying the present invention. Thus unit has a filter which produces a signal representing the green image of the negative for display, in addition to the signals for red image and the blue image in the previous units. Each of these signals is processed individually at a control and processing device 60 in order to derive the appropriate colour difference signal (i.e. R−Y, B−Y or G−Y), which is thereafter stored in the respective memory 61, 62 or 63. In order to provide a display on a television screen, the memories provide a repeated output of these signals, each of which is combined with the full luminance signal Y obtained directly and continuously from the negative. No delay line is required to compensate for delays through the various filters and digital circuits, as there is provided suitable adjustment of the timing of the start point of the store address counter relative to TV field syncs. Also, provision is made to remove the γ of the pick-up tube prior to analogue-to-digital conversion, and to re-apply a suitable γ at the R, G and B outputs.

Only one field of each colour is held in the stores (e.g. even field), the alternate field being provided by repeating the first field twice when taking data out of the stores. This provides more than enough vertical colour resolution when compared with the horizontal 1.3 MHz bandwidth used. The store outputs, after processing (i.e. now being colour difference signals) are added to a suitably scaled version of the "live" Y signal such that low frequency Y data (i.e. up to 1.3 MHz) cancels out leaving the low frequency colour plus the high frequency (detail) Y signal on the R, G and B outputs to the display device.

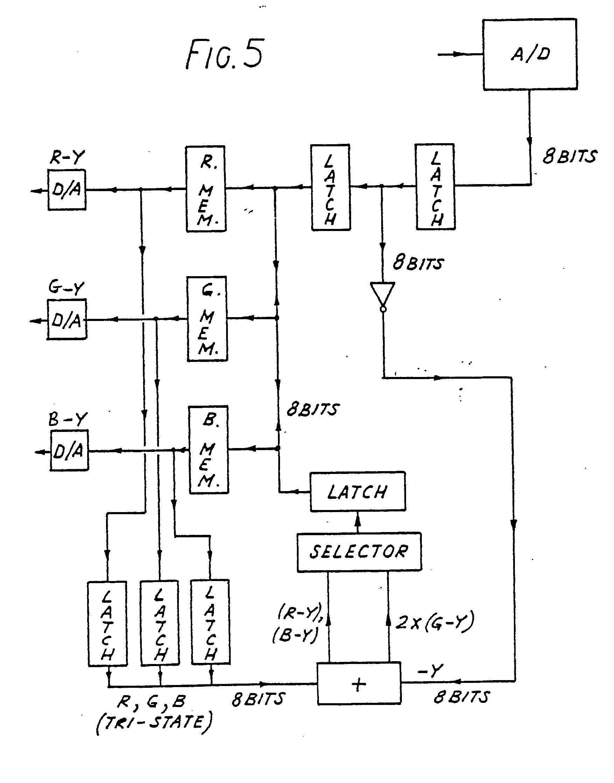

Figure 5 is a block diagram which shows one implementation of the processing section of device 60, namely that section having the function of deriving the colour difference signals R−Y, B−Y and G−Y from the signals representing selective images of the negative.

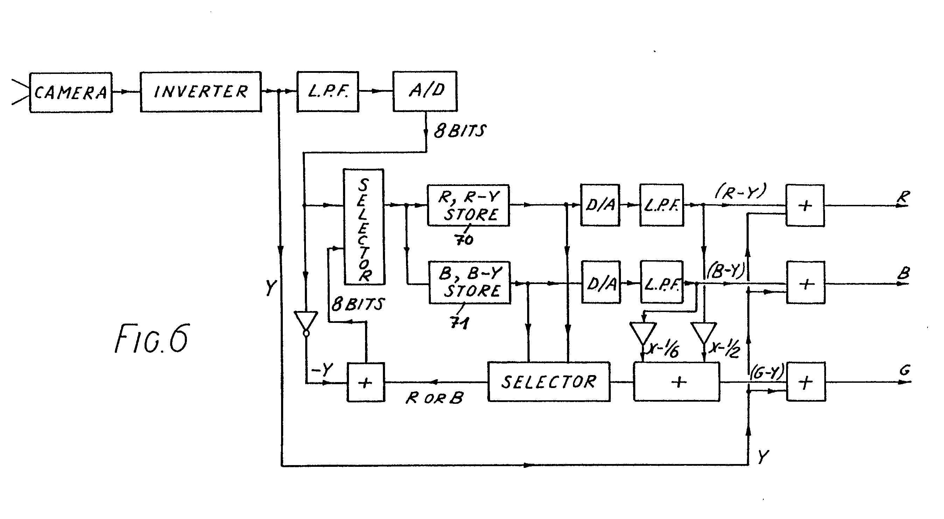

Figure 6 shows, in block diagram format, another unit embodying the present invention in which there are two stores 70 and 71 for colour-difference signals (namely R−Y and B−Y), the third colour-difference signal, G−Y, being drived from the other two.

In order to set up this unit for display of the negative, the signals representing the red image and the blue image are input to the appropriate stores 70 and 71, and then each is output therefrom in order to be summed with the inverse of the luminance signal Y which is output directly from the pick-up tube, the resultant colour-difference signal (R−Y or B−Y) then being put into the appropriate store 70 and 71 in place of the original colour signal (R or B respectively).

By using colour-difference signals, intermittent colour shift errors are minimized, because any fluctuations at the pick-up tube output will only cause fluctuations in the intensity of the image displayed.

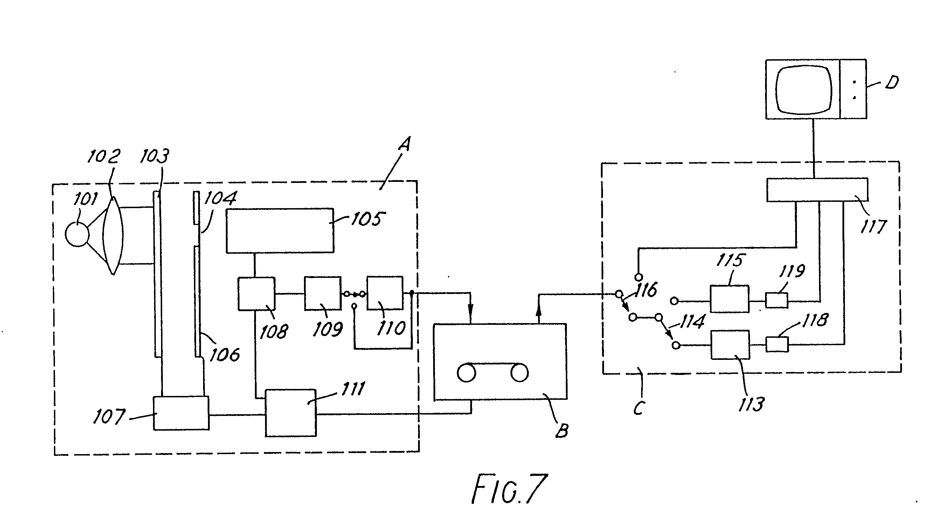

The equipment illustrated in Figure 7 has four distinct elements, namely: a photographic negative scanner A which derives, from a photographic negative, electrical signals for storage on a video tape cassette; a video tape recorder B; a playback module C which processes the electrical signals into a form suitable for display on a television screen; and a television receiver D. Clearly, not all the elements forming the equipment need to be used simultaneously, nor as a single complete unit. Thus for example an individual may take a selection of his slides to a shop or photographic processor for them to transfer the slides to a magnetic format on a video tape casssette using elements A and B of the equipment. In this way the individual himself need not possess element A of the equipment, requiring only elements B, C and D in order to view his slides on a television screen.

More specifically, in the equipment shown in Figure 7, light from an appropriate source 101 is directed by a lens system 102 through a filter 103 and onto a negative 104 so as to project an image onto the light sensitive target area of a 2/3" vidicon pick-up tube 105. Negative 104 is held in a plastics mount 106 of the disc format developed by the Eastman Kodak Corporation. The filter 103 is similar to that shown in Figure 2, namely it is a wheel having three sectors, each of which transmits a different colour portion of an incident light beam; the wheel is mounted for rotation by a drive motor 107 such that each sector of the filter can be positioned in the path of the light beam in turn. Signals received at the pick-up tube 105 are suitably processed (as described in further detail below) and then passed to a video tape cassette recorder B in order to be stored on a video tape cassette. Once this transfer has been achieved, motor 107 rotates mount 106 until another negative is suitably positioned in the light beam for display.

At the start of operation of the unit, the filter 103 is in an orientation whereby a sector which transmits only red light is in the light beam; as the signals for forming the red image on a television screen are derived from this sector of the filter 103, it will subsequently be referred to as the RED sector and the resultant signal will be referred to as the RED component signal. Using internally generated scanning signals, pick-up tube 105 scans the complete frame of the red component image to form an appropriate electric signal which is suitably inverted and amplified at the pick-up head amplifier 108. This signal is then fed to a video processor 109, at which suitable blanking and clamping are added; at this stage a code is added to the vertical blanking interval and to the audio and control tracks, in order to identify the component signal and negative. After processing at an analogue-to-digital converter 110, the signal passes to recorder B where it is recorded on video tape. Typically, an 8-bit deep signal would occupy eight television frames on the video tape. A controller 111 monitors this operation so that, once recorder B has received the complete frame of the RED component signal, the controller 111 instructs motor 107 to turn filter 103 until a sector which transmits only blue light is in the light beam; this sector will subsequently be referred to as the BLUE sector and the resultant signal will be referred to as the BLUE component signal. After processing in the same way as for the red image, the resultant signal is recorded onto the video tape adjacent to the RED component signal.

Once recorder B has received the complete frame of the BLUE component signal, motor 107 is instructed by controller 111 to turn filter 103 until the transparent sector is in the light beam, so that a wide band luminance image of negative 104 is produced for tube 105. The transparent sector of filter 103 has a pass-band characteristic similar to the response of a human eye as published by C.I.E., with due allowance for the film base material used, additional to or augmenting any colour balancing (known as "Auto White") provision. Thus, after this wide band luminance image is processed in the same way as for the RED and BLUE component signals (except that the analogue-to-digital converter 110 is by-passed), the resultant signal ($S_{LUM}$) is recorded onto the video tape in analogue form.

Once recorder B has received the complete frame signal of ($S_{LUM}$), controller 111 instructs motor 107 to turn filter 103 until the RED sector is in the light beam, and to turn mount 106 until another negative is in the light beam. Then the recording process described above is repeated so that each of the three component signals for the new negative are stored separately on the video tape. In this way, a collection of many negatives can be stored on a single video tape cassette.

When it is desired to display, on the television receiver D, the taped image of negative 104, the reference number of that negative is keyed into recorder B which then searches for the identification code corresponding to the start of the RED component signal for that negative. Once this position has been located, recorder B plays back the RED component signal which is passed to an electronic memory store 113. Controller 111 identifies the end of the RED component signal as it passes out of recorder B and operates switch 114 such that the succeeding BLUE component signal is passed to a different electronic memory store 115. When controller 111 identifies the end of the BLUE component as it passes out of recorder B the controller operates switch 116 in order to pass the output, which is now $S_{LUM}$, directly to a video matrix unit 117 without further storage. At this stage, further movement of the video tape within recorder B is halted but the recorder is maintained in a mode whereby its tracking heads provide repeated reading out of the signal $S_{LUM}$.

Meanwhile, the RED and BLUE component signals held in memory stores 113 and 115 are read out, these signals being converted to analogue form in convertors 118 and 119 and then passed to matrix unit 118 where they are processed together with $S_{LUM}$ in order to produce the R, G and B signals for display on television receiver D. Thus the three component signals, which are necessary to form an image of negative 104 on television receiver D, are available simultaneously, two of these components being derived from electronic memory stores and the third being derived from a recording on video tape.

In similar fashion to the unit of Figure 4, recorder B and stores 113, 115 need only (if preferred) store one field of each of the three colour components, the alternate field being provided by repeating the stored signals.

In a modification incorporating a video cassette recorder without tracking heads to enable play back of a video frame with the recorder in the pause mode, the signal $S_{LUM}$ can be recorded repeatedly on the video tape to provide a continuous output of that component of a duration corresponding to the required display time of the image. In order to minimize crosstalk, a pseudo guard band or additional azimuth safeguards may be included.

If it is desired to display a picture of a photographic transparency rather than a negative, the colour inversion can be achieved electronically (for example by by-passing the signal inversion stage) or by an appropriate choice of colour filter.

Clearly, the scanner A may be modified by replacing the arrangement of light source 101, lens system 102 and vidicon pick-up tube 105 with a flying spot scanner in a similar fashion to that as already described with reference to Figure 4.

In another modification, the scanner A is replaced by a unit which derives, from a photographic (or other) print, electrical signals for storage on recorder B and eventual display on television receiver D.

In another modification, all the signals are stored in analogue form on the video tape, in order to provide more efficient storage on the video tape and to achieve a faster access time for information on the video tape. However, in this case module C will need an analogue-to-digital convertor for the RED and BLUE signals before their storage in stores 113 and 115 respectively, thereby increasing the manufacturing cost of module C.

In one application of the present invention, any of the units described above may be used to provide the background image on a television receiver screen, the foreground image being produced by other means (for example by using a microcomputer); such an arrangement is particularly suited for a television video game, whether for domestic or commercial use. For example two similar units of any of the above-described types may be used to provide a static but changeable background, free of discontinuities and interruptions when a change occurs; in this case a microcomputer would be used to generate some superimposed images and, optionally, to control the units. If it is required to produce a background which continuously moves (as observed by the human eye), it is necessary to have a sufficient number of units to enable the simultaneous processing and sequential display, of a number of images. Clearly, a television video game installation, which uses one or more units in this way, may be substantially cheaper to manufacture than a conventional installation incorporating a video disc player for generation of the background image.

## Claims

1. Equipment for displaying a still image on a video display unit, said equipment comprising:
means to produce electrical signals which represent an optical image;
a single opto-electric converter device, in said electrical signal production means, with a single pick-up tube to pick up a light beam and convert it to an electrical signal;
a light source, in said electrical signal production means, positioned to direct a beam of light through a region for containing an optical representation and towards the single opto-electric converter device;
a filter having a number of sections of different pass-band characteristics, indivdually selectable for use in association with the electrical-signal production means, at least some of the pass-band characteristics constituting colour-component characteristics;
means to switch operation of the filter, in relation to the electrical-signal production means, between at least two pass-band characteristics;
means to store the output of the electrical-signal production means for each of at least two of the pass-band characteristics of the filter, the outputs constituting colour-component signals;
means for providing a repeated output of colour-component signals held in the storage means;
means for mixing signals from the repeated-output means with signals directly output, without storage, from the electrical-signal production means, thereby to provide a composite video signal for display.

2. Equipment according to Claim 1, further comprising means to store, separately, the output of the electrical-signal production means for each of three pass-band characteristics of the filter, whereby each of the three characteristics relates to a different one of the three appropriate fundamental colour-components.

3. Equipment according to Claim 1 or Claim 2, further comprising means to store, separately, the output of the electrical-signal production means for each of two pass-band characteristics of the filter, whereby these two characteristics relate to two of the three appropriate fundamental colour-components, and means to derive a signal relating to the third of the appropriate fundamental colour-components, the derivation means making use of signals related to the other two of the fundamental colour-components and/or of signals not incorporating indivdual colour-components.

4. Equipment according to any one of Claims 1 to 3, comprising first storage means to store the output of the electrical-signal production means for each of at least three of the pass-band characteristics of the filter, at least two of the outputs constituting colour-component signals;
second storage means to store some, but not all, the signals held in the first storage means;
means for providing a repeated output of colour-component signals held in the second storage means;
means for mixing signals from the repeated-output means with signals directly output from the first storage means, thereby to provide a composite video signal for display.

## Patentansprüche

1. Einrichtung zur Wiedergabe eines ruhenden Bildes auf einer Video-Wiedergabeeinheit, wobei die Einrichtung umfaßt:
Mittel zum Erzeugen elektrischer Signale, die ein optisches Bild darstellen;
eine einzelne optisch-elektrische Umsetzer-Vorrichtung in den genannten Mitteln zur Erzeugung der elektrischen Signale mit einer einzelnen Aufnahmeröhre, um einen Lichtstrahl aufzunehmen und ihn in ein elektrisches Signal umzusetzen;

eine Lichtquelle in den genannten Mitteln zur Erzeugung der elektrischen Signale, die so positioniert ist, daß sie einen Lichtstrahl durch einen eine optische Darstellung enthaltenden Bereich und auf die einzelne optisch-elektrische Umsetzer-Vorrichtung richtet;

ein Filter, das eine Anzahl von Abschnitten mit unterschiedlichen Durchlaßbereichs-Charakteristiken hat, die individuell für die Verwendung in Verbindung mit den Mitteln zur Erzeugung der elektrischen Signale auswählbar sind, wobei wenigstens einige der Durchlaßbereichs-Charkteristiken Farbkomponenten-Charakteristiken bilden;

Mittel, um den Betrieb des Filters in bezug auf die Mittel zur Erzeugung der elektrischen Signale zwischen wenigstens zwei Durchlaßbereichs-Charakteristiken zu schalten;

Mittel, um den Ausgang der Mittel zur Erzeugung der elektrischen Signale für jede von wenigstens zwei Durchlaßbereichs-Charakteristiken des Filters zu speichern, wobei die Ausgänge Farbkomponenten-Signale bilden;

Mittel, um einen wiederholten Ausgang von in den Speichermitteln gehaltenen Farbkomponenten-Signalen zu erzeugen;

Mittel, um Signale von den Mitteln zur Erzeugung des wiederholten Ausgangs mit direkten nicht gespeicherten Ausgangs-Signalen von den Mitteln zur Erzeugung der elektrischen Signale zu mischen, um dadurch ein zusammengesetztes Videosignal für die Wiedergabe zu erzeugen.

2. Einrichtung nach Anspruch 1, die ferner Mittel umfaßt, um getrennt den Ausgang der Mittel zur Erzeugung der elektrischen Signale für jede von drei Durchlaßbereichs-Charakteristiken des Filters zu speichern, wobei jede der drei Charakteristiken sich auf eine unterschiedliche Komponente der drei geeigneten Grund-Farbkompomenten bezieht.

3. Einrichtung nach Anspruch 1 oder 2, die weiterhin Mittel umfaßt, um getrennt den Ausgang der Mittel zur Erzeugung der elektrischen Signale für jede von zwei Durchlaßbereichs-Charakteristiken des Filters zu speichern, wobei diese zwei Charakteristiken sich auf zwei der drei geeigneten Grund-Farbkomponenten beziehen, und Mittel, um ein Signal abzuleiten, das sich auf die dritte der geeigneten Grund-Farbkomponenten bezieht, wobei die Ableitungsmittel von Signalen Gebrauch machen, die auf die anderen zwei Grund-Farbkomponenten und/oder auf Signale bezogen sind, die keine individuellen Farbkomponenten beinhalten.

4. Einrichtung nach einem der Ansprüche 1 bis 3, umfassend erste Speichermittel, um den Ausgang der Mittel zur Erzeugung der elektrischen Signale für jede von wenigstens drei Durchlaßbereichs-Charakteristiken des Filters zu speichern, wobei wenigstens zwei Ausgänge Farbkomponenten-Signale bilden;

zweite Speichermittel, um einige aber nicht alle in den ersten Speichermitteln gehaltenen Signale zu speichern;

Mittel, um einen wiederholten Ausgang von in den zweiten Speichermitteln gehaltenen Farbkomponenten-Signalen zu erzeugen;

Mittel, um Signale von den Mitteln zur Erzeugung des wiederholten Ausgangs mit direkten Ausgangs-Signalen von den ersten Speichermitteln zu mischen, um dadurch ein zusammengesetztes Videosignal für die Wiedergabe zu erzeugen.

**Revendications**

1. Equipement pour afficher une image fixe sur une unité de visualisation vidéo, ledit équipement comprenant:

Un moyen pour former des signaux électriques qui représentent une image optique;

un unique dispositif convertisseur opto-électrique, dans ledit moyen de production d'un signal électrique, avec un seul tube capteur pour capter un faisceau lumineux et le transformer en un signal électrique;

une source lumineuse, dans ledit moyen de production d'un signal électrique, placé de manière à orienter un faisceau lumineux à travers une région destinée à contenir une représentation optique et en direction de l'unique dispositif convertisseur opto-électrique;

un filtre comprenant un certain nombre de sections ayant des caractéristiques de bandes passantes différentes, pouvant être individuellement sélectionnées afin d'être utilisées en association avec le moyen de production des signaux électriques, au moins certaines des caractéristiques de bandes passantes constituant des caractéristiques de composantes de couleur;

un moyen pour commuter le fonctionnement du filtre, en relation avec le moyen de production des signaux électriques, entre au moins deux caractéristiques de bandes passantes;

un moyen de stockage de la sortie du moyen de production de signaux électriques pour chacune des deux caractéristiques au moins de bandes passantes du filtre, les sorties constituant des signaux de composantes de couleur;

un moyen pour former une sortie répétée de signaux de composante de couleur, gardés dans le moyen de stockage;

un moyen pour mélanger des signaux venant du moyen de sortie répété avec des signaux sortis directement, sans stockage, du moyen de production de signaux électrique, afin de former ainsi un signal vidéo complexe pour le visualiser.

2. Equipement selon la revendication 1, comprenant en outre un moyen pour stocker, séparément, la sortie du moyen de production des signaux électriques pour chacune des trois caractéristiques de bandes passantes du filtre, de façon que chacune des trois caractéristiques soit en liaison avec une différente des trois composantes des couleurs fondamentales appropriées.

3. Equipement selon l'une des revendications 1 ou 2, comprenant en outre un moyen pour stocker, séparément, la sortie du moyen de production des signaux électriques pour chacune des deux caractéristiques de bandes passantes du filtre, de façon que ces deux caractéristiques correspondent à deux des trois composantes de couleur fondamentales appropriées, et un moyen pour déduire un signal relatif à la troisième des composantes de couleur fondamentales appropriées, le moyen de déduction faisant usage des signaux liés aux deux autres composantes de couleur fondamentales et/ou de signaux n'incorporant pas de composantes individuelles de couleur.

4. Equipement selon l'une quelconque des revendications 1 à 3, comprenant un premier moyen de stockage pour stocker la sortie du moyen de production des signaux électriques pour chacune de trois au moins des caractéristiques de bandes passantes du filtre, deux au moins des sorties constituant des signaux de composante de couleur;

un second moyen de stockage pour stocker une partie, mais pas la totalité, des signaux contenus dans le premier moyen de stockage;

un moyen pour créer une sortie répétée des signaux de composante de couleur maintenue dans le second moyen de stockage;

un moyen pour mélanger des signaux provenant du moyen de sortie répété avec des signaux directement sortis du premier moyen de stockage, afin de créer un signal vidéo complexe pour l'affichage.

FIG.1

0 126 597

FIG.2

FIG.3

FIG. 4

# FIG.5

FIG. 6

FIG.7

0 126 597